# EUROPÄISCHE PATENTSCHRIFT

(11) **EP 4 342 741 B1**
(45) Veröffentlichungstag und Bekanntmachung des Hinweises auf die Patenterteilung: **23.04.2025**
(21) Anmeldenummer: 22196909.0
(22) Anmeldetag: 21.09.2022
(51) Int. Cl.: B60R 19/34, B60R 19/24

(54) **STOSSFÄNGERANORDNUNG FÜR EIN KRAFTFAHRZEUG**
BUMPER ARRANGEMENT FOR A MOTOR VEHICLE
AGENCEMENT DE PARE-CHOCS POUR UN VÉHICULE AUTOMOBILE

(43) Veröffentlichungstag der Anmeldung: 27.03.2024
(73) Patentinhaber: Benteler Automobiltechnik GmbH, 33102 Paderborn (DE)
(72) Erfinder: Hunke, Benjamin, 33102 Paderborn (DE); Krenzer, Harald, 85551 Kirchheim (DE); Röper, Burkhard, 33104 Paderborn (DE)
(74) Vertreter: Ksoll, Peter

(56) Entgegenhaltungen:
- CN-A- 112 519 710
- DE-A1- 102008 039 513
- JP-A- 2008 213 739
- US-A1- 2014 203 578
- US-B1- 8 608 231

## Beschreibung

Die Erfindung betrifft eine Stoßfängeranordnung für ein Kraftfahrzeug mit einem Querträger und ersten Deformationselementen in Form von Crashboxen, wobei seitlich neben zumindest einem ersten Deformationselement ein zweites Deformationselement vorgesehen ist.

Stoßfängeranordnungen sind bei Kraftfahrzeugen front- und heckseitig eingebaut, um Stoßenergie von Anprallvorgängen abzufangen, so dass die Tragstruktur des Kraftfahrzeugs möglichst nicht beschädigt wird. Zudem sollen Stoßfängeranordnungen dazu beitragen, Verletzungen bei Fußgängern oder Radfahrern zu minimieren. Eine Stoßfängeranordnung besteht aus einem Querträger, der unter Eingliederung von Deformationselementen in Form von Crashboxen quer zu den Längsträgern des Kraftfahrzeugrahmens festlegbar ist. Der Querträger dient dazu, die aus einem Anprall resultierende Energie in die Crashboxen einzuleiten, wo die Stoßenergie in Verformungsarbeit umgewandelt wird. Die Stoßfängeranordnung ist dabei so aufeinander abgestimmt, dass die Crashboxen jeweils möglichst mittig auf den Längsträgern des Kraftfahrzeugs sitzen und die Stoßenergie über die Querträger mit einem möglichst geringen Biegemoment in die Crashboxen und damit auch in die Längslenker eingeleitet wird.

Bei der aus DE 10 2008 039 513 A1 bekannten Stoßfängeranordnung sind im Bereich der äußeren Endabschnitte des Querträgers zwischen den Enden und den längsträgerseitigen Flanschplatten der Crashboxen zusätzlich Deformationselemente in Form von Stützelementen angeordnet. Sowohl der Querträger als auch die Stützelemente sind aus Strangpressprofilen gebildet.

Die CN 112 519 710 A offenbart eine Stoßfängeranordnung für ein Kraftfahrzeug mit einem Querträger und ersten Deformationselementen in Form von Crashboxen, die dem Oberbegriff des Anspruchs 1 entspricht, wobei seitlich neben zumindest einem ersten Deformationselement ein zweites Deformationselement vorgesehen ist. Das zweite Deformationselement ist ein Strangpressprofil, wobei das Strangpressprofil mit seiner Strangpressrichtung in z-Achse (Kraftfahrzeughochachse) des Kraftfahrzeugs orientiert ist.

Eine Stoßfängeranordnung für ein Kraftfahrzeug mit einem Querträger und Stützelementen, welche aus Strangpressprofilen gebildet sind, geht des Weiteren aus der DE 10 2008 039 513 A1 hervor.

Die JP 2008 213739 A offenbart eine Stoßfängerverstärkung, die an einer Stirnseite eines Querträgers befestigt ist.

Die US 8 608 231 B1 offenbart einen Fahrzeugstrukturrahmen mit einem Überlappungs-Barrieren-Aufprall-Verformungsschema, wobei der Rahmen eine Schiene, eine erste Energieabsorptionsvorrichtung und ein Verbindungsstück aufweist, wobei sich das Verbindungsstück zwischen der Schiene und der ersten Energieabsorptionsvorrichtung erstreckt. Die US 2014/203578 A1 offenbart eine Kraftfahrzeug-Stoßfängeranordnung gemäß dem Oberbegriff des Anspruchs 1.

Stoßfängeranordnungen müssen die gesetzlichen Regelungen ebenso die von Verbraucherschutzorganisationen gestellten Anforderungen an einen Fußgängerschutz erfüllen. Neben einer guten Crashperformance stellt sich herstellerseitig die Anforderung, den zur Verfügung stehenden Bauraum bestmöglichst auszunutzen und gewichtsmäßig vorteilhafte Kraftfahrzeug-Stoßfängeranordnungen bereitzustellen. Diese Zielvorgaben sollen gleichzeitig im Einklang mit den hohen Anforderungen an die Sicherheitsstruktur eines Kraftfahrzeugs stehen. Dabei sind strenge Sicherheitsanordnungen zu erfüllen, die über Crashtests, wie den sogenannten Pole-Test für Small Overlap-Lastfälle, geprüft werden.

Der Erfindung liegt ausgehend vom Stand der Technik die Aufgabe zugrunde, eine fertigungstechnisch- und gewichtsvorteilhafte Kraftfahrzeug-Stoßfängeranordnung aufzuzeigen mit effizientem Energieabsorptionsvermögen auch bei nur einseitiger oder ungünstiger Lasteinwirkung im Falle einer Unfallkonfiguration bei der die Stoßfängeranordnung nur mit einer geringen Überdeckung getroffen wird, beispielsweise durch ein anderes Fahrzeug oder ein fixes Hindernis.

Die Lösung dieser Aufgabe zeigt Anspruch 1 auf.

Vorteilhafte Ausgestaltungen und Weiterbildungen der erfindungsgemäßen Stoßfängeranordnungen sind Gegenstand der abhängigen Ansprüche.

Ausgestaltungen und Modifikationen von Merkmalen der Kraftfahrzeug-Stoßfängeranordnung, die einzeln oder in Kombination die Stoßfängeranordnung funktional und technologisch vorteilhaft ausgestalten, ergeben sich auch aus der Beschreibung und den beigefügten Zeichnungen.

Das zweite Deformationselement ist ein Strangpressprofil. Das Strangpressprofil ist aus einem durch Strangpressen hergestellten Profilstrang in erforderlicher Länge abgeteilt. Der Profilstrang weist eine sich in dessen Längsrichtung erstreckende Strangpressrichtung auf. Bei der Strangpressrichtung handelt es sich um die Richtung in der der Profilstrang extrudiert bzw. stranggepresst worden ist.

Das Strangpressprofil ist in der Stoßfängeranordnung mit seiner Strangpressrichtung in z-Achse (Fahrzeughochachse) des Kraftfahrzeugs orientiert. Orientiert bedeutet, dass sich die Strangpressrichtung in z-Achse erstreckt. Vorzugsweise erstreckt sich die Strangpressrichtung vertikal in Fahrzeughochachse, wobei sowohl toleranzbedingte Abweichungen als auch Neigungen von ± 10 Grad relativ zur z-Achse möglich sind.

Das zweite Deformationselement weist eine innere Seitenwand und eine äußere Seitenwand auf. Die innere Seitenwand und die äußere Seitenwand erstrecken sich parallel zu den Seitenwänden der Crashbox. Die innere Seitenwand und die äußere Seitenwand sind über zumindest einen Quersteg miteinander verbunden.

Bezogen auf die Fahrzeugmittellängsachse ist die innere Seitenwand zur Fahrzeugmittellängsachse gerichtet bzw. auf der zur Fahrzeugmittellängsachse liegenden Seite angeordnet. Die äußere Seitenwand ist von der Fahrzeugmittellängsachse weggerichtet bzw. auf der von der Fahrzeugmittellängsachse außenliegenden Seite angeordnet.

Vorzugsweise besteht das Strangpressprofil aus Leichtmetall bzw. Leichtmetalllegierungen, insbesondere aus Aluminium oder Aluminiumlegierungen. Hierbei sind komplexe Formen abgestimmt auf den Verwendungszweck möglich. Das Strangpressprofil ist hinsichtlich des Werkstoffs und der geometrischen Gestalt ausgebildet für den Einsatz als zweites Deformationselement.

Die ersten Deformationselemente sind Crashboxen, die zwischen dem Querträger und einem Längsträger des Kraftfahrzeugs eingegliedert sind. Bei den ersten Deformationselementen handelt es sich um die Hauptcrashboxen der Stoßfängeranordnung. Die zweiten Deformationselemente fungieren als Hilfscrashboxen.

Die zweiten Deformationselemente sind nach außen in Richtung zum freien Ende des Querträgers versetzt mit Abstand neben einem ersten Deformationselement bzw. einer Crashbox angeordnet.

Das Strangpressprofil weist eine durch das Strangpressen vorgegebene Strangpressrichtung auf. Das Strangpressprofil ist erfindungsgemäß mit der Strangpressrichtung in z-Achse (Fahrzeughochachse) des Kraftfahrzeugs orientiert.

Ein Fahrzeugkoordinatensystem ist ein dreidimensionales kartesisches Koordinatensystem, um die Achsen innerhalb des Kraftfahrzeugs zu kennzeichnen. Die x- und y-Achse liegen in einer Horizontalebene (= Fahrzeugebene). Die x-Achse entspricht der Fahrzeuglängsachse, die y-Achse entspricht der Fahrzeugquerachse und die z-Achse entspricht der Fahrzeughochachse.

Begriffe wie quer und längs, oben und unten, horizontal und vertikal oder Längsrichtung und Querrichtung sowie Oberseite und Unterseite beziehen sich jeweils auf die Einbaulage der Stoßfängeranordnung in einem Kraftfahrzeug.

Das Strangpressprofil weist Seitenwände auf, die über Querstege verbunden sind. Die Seitenwände und die Querstege schließen in Einbaulage eine nach oben und unten geöffnete Hohlkammer ein.

Vorzugsweise sind die innere Seitenwand und die äußere Seitenwand eines Strangpressprofiles über zwei Querstege verbunden. Ein Quersteg ist fahrzeugnah angeordnet, ein zweiter Quersteg ist querträgernah angeordnet. Fahrzeugnah bedeutet, dass der Quersteg am zum Längsträger hin gerichteten Abschnitt des zweiten Deformationselements angeordnet ist. Querträgernah bedeutet, dass der Quersteg am zum Querträger hin gerichteten Ende des zweiten Deformationselements angeordnet ist.

Bezogen auf die x-Achse (Fahrzeuglängsachse) ist der querträgernahe Quersteg ein vorderer Quersteg des Strangpressprofils und der fahrzeugnahe Quersteg ein hinterer Quersteg des Strangpressprofils.

Da die Strangpressprofile von einem Profilstrang abgetrennt sind, weisen die Querstege eine Höhe auf, die der Höhe der äußeren Seitenwand und der inneren Seitenwand entsprechen.

Vorzugsweise weist das Strangpressprofil zumindest eine Hohlkammer auf. Die Hohlkammer weist aufgrund der Herstellung des Profilstrangs, aus dem die einzelnen Strangpressprofile abgeteilt sind, eine vorgegebene Richtung auf. Diese Richtung wird als Strangpressrichtung bezeichnet. Die Strangpressrichtung bleibt auch dann erhalten, wenn das Strangpressprofil nach dem Strangpressen in Teilbereichen mechanisch bearbeitet, beispielsweise gebogen wird.

Das Strangpressprofil weist eine oder mehrere Hohlkammern auf, wobei die Hohlkammer bzw. die Hohlkammern an der Unterseite und an der Oberseite des Strangpressprofils offen sind.

Erfindungsgemäß weist dass zumindest ein Wandabschnitt des Strangpressprofils ein Solldeformationselement und/oder ein Dehnungsausgleichselement auf.

Solldeformationselement und/oder Dehnungsausgleichselement können durch eine Formgebung des Wandabschnitts oder auch durch eine mechanische Bearbeitung ausgebildet sein. Beispielsweise können ein Solldeformationselement ebenso wie ein Dehnungsausgleichselement durch Sicken, Einschnürungen oder Falten, Biegungen oder Wellen im Wandabschnitt einer Seitenwand gebildet sein.

Weiterhin vorteilhaft sind parallel und mit Abstand zueinander verlaufende Wandabschnitte des Strangpressprofils dafür ausgebildet und bestimmt, sich in einem Crashfall gegeneinander abzustützen. Diese Maßnahme verbessert das Crashverhalten und die Energieabsorption des zweiten Deformationselements und damit der Stoßfängeranordnung insgesamt.

Ein Dehnungsausgleichselement ist insbesondere in einer äußeren Seitenwand des Strangpressprofils vorgesehen. Ein Dehnungsausgleichselement kann beispielsweise durch einen gewellten oder gekrümmten Abschnitt innerhalb der Seitenwand ausgebildet sein. Bei einem Crash, insbesondere bei einer Stoß- bzw. Anprallbelastung seitlich in Richtung der Fahrzeugquerachse auf einem Endabschnitt des Querträgers der Stoßfängeranordnung, deformiert das zweite Deformationselement, wobei sich die äußere Seitenwand plastisch durch Zugbelastung verformt. Hierbei erfolgt eine Streckung oder Begradigung bzw. Einebnung des Dehnungsausgleichselements.

Ein Solldeformationselement ist dafür eingerichtet und bestimmt, im Falle eines Anpralls gezielt eine Verformung zu initiieren.

Weiterhin vorteilhaft weist das Strangpressprofil Montageabschnitte und/oder Montageelemente auf zur stoffschlüssigen oder zur kraft- und/oder formschlüssigen Verbindung mit dem Querträger und/oder einer längsseitigen Flanschplatte.

Montageabschnitte und/oder Montageelemente können Montageöffnungen aufweisen zur Durchführung von Schraub- oder Nietverbindungsmitteln. Weiterhin können Montageabschnitte oder Montageelemente Formschlusskonturen aufweisen. Eine Formschlusskontur kann beispielsweise ein Hakenelement sein, welches an einem Wandabschnitt des querträgerseitigen Querstegs vorgesehen ist. Mit dem Hakenelement kann das Strangpressprofil auf einen Abschnitt des Querträgers, insbesondere der Querträgerrückwand aufgeschoben werden. Zusätzlich kann das Strangpressprofil mit dem Querträger verschweißt werden.

Bei einer weiteren Ausführungsform ist eine Flanschplatte vorgesehen, an welcher sich ein längsträgerseitiges Ende einer Crashbox und das Strangpressprofil abstützen. Hierbei kann die Flanschplatte Positionierelemente oder Montageelemente aufweisen, an welchen das Strangpressprofil positioniert wird und/oder sich abstützen und/oder montiert werden kann. Ein Montageelement kann auch als Widerlager für das Strangpressprofil innerhalb der Stoßfängeranordnung fungieren.

Anstelle längsträgerseitiger Flanschplatten kann auch vorgesehen sein, die Crashboxen und/oder das Strangpressprofil direkt in einen Fahrzeuglängsträger oder einen Längsträgerabschnitt einsteckbar auszugestalten und mit diesen zu verschrauben.

Vorzugsweise sind eine Crashbox und ein benachbartes Strangpressprofil in Längsrichtung des Querträgers mit Abstand angeordnet. Die Längsrichtung des Querträgers erstreckt sich in y-Achse (Fahrzeugquerachse). Durch den Abstand ist sichergestellt, dass es im Falle einer Verformung des zweiten Deformationselements nicht zu einem Kollidieren zwischen dem ersten Deformationselement und dem zweiten Deformationselement kommt.

Der Abstand zwischen einer Crashbox und dem benachbarten Strangpressprofil wird gemessen zwischen den benachbarten Seitenwänden von Crashbox und Strangpressprofil. Das sind die auf der Seite des Strangpressprofils liegende Seitenwand der Crashbox und die innere Seitenwand des Strangpressprofils.

Bei der Stoßfängeranordnung ist jeweils zwischen einem Längsträger des Kraftfahrzeugs und dem Querträger eine Crashbox eingegliedert. Der Querträger weist einen mittleren Längenabschnitt auf, an den sich beidseitig Endabschnitte anschließen. Jeder Endabschnitt verläuft von einer Crashbox auswärts bis zum äußeren Ende des Querträgers. Seitlich neben zumindest einer Crashbox ist zwischen dem entsprechenden Endabschnitt und einer längsträgerseitigen Abstützung das Strangpressprofil angeordnet.

Bei einer weiteren vorteilhaften Ausführungsform sind das Strangpressprofil und eine Flanschplatte, insbesondere die längsträgerseitige Flanschplatte einteilig und werkstoffeinheitlich stranggepresst bzw. extrudiert ausgebildet.

Weiterhin vorteilhaft weist das Strangpressprofil wenigstens eine Strangpressnaht auf. Die Strangpressnaht erstreckt sich in der Einbaulage des Strangpressprofils in z-Achse (Fahrzeughochachse). Insbesondere sind die eine oder jede Strangpressnaht jeweils in einer Ecke bzw. einem Eckbereich des Strangpressprofils am Übergang vom querträgerseitigen Quersteg zur inneren Seitenwand und der äußeren Seitenwand bzw. am Übergang bzw. der Ecke zwischen dem längsträgerseitigen Quersteg und inneren Seitenwand und der äußeren Seitenwand vorgesehen. Vorzugsweise weist das Strangpressprofil im horizontalen Querschnitt entsprechend der Fahrzeugebene vier Strangpressnähte auf. Jeweils eine Strangpressnaht ist in einer Ecke des Strangpressprofils angeordnet. Die Strangpressnähte sind folglich in den Bereichen des Strangpressprofils positioniert, welche einer geringen Verformungsgefahr bzw. Beanspruchung unterliegen. Im Gegensatz zu Schweißnähten zeichnen sich prozessbedingte Strangpressnähte durch das Fehlen von unter Umständen nachteiligen Wärmeeinflusszonen, Festigkeitsfluktuationen und/oder Materialinhomogenitäten auf, welche bei Schweißvorgängen in Folge von notwendigen Schweißzusatzstoffen oder Verunreinigungen auftreten können.

Die Stoßfängeranordnung umfasst in vorteilhaften Ausführungsformen und Modifikationen eines oder mehrere der folgenden Merkmale, die einzeln oder in technisch vorteilhafter Kombination vorgesehen sind:
- das zweite Deformationselement ist ein Strangpressprofil, welches in der Stoßfängeranordnung so angeordnet ist, dass die Strangpressrichtung in z-Achse (Fahrzeughochachse) gerichtet ist;
- das Strangpressprofil des zweiten Deformationselements weist zumindest eine oberseitig und unterseitig offene Hohlkammer auf;
- das erste Deformationselement und das zweite Deformationselement sind in Längsrichtung des Querträgers mit Abstand zueinander angeordnet;
- das zweite Deformationselement ist relativ zum ersten Deformationselement nach außen in Richtung zum Ende des Querträgers versetzt angeordnet;
- das erste Deformationselement und das zweite Deformationselement stützen sich an einer gemeinsamen längsträgerseitigen Flanschplatte ab;
- das Strangpressprofil des zweiten Deformationselements weist ein innere Seitenwand und eine äußere Seitenwand auf, die sich in x-Achse (Fahrzeuglängsachse) zwischen dem Querträger und einer längsträgerseitigen Flanschplatte erstrecken, wobei die innere Seitenwand und die äußere Seitenwand durch einen querträgerseitigen, sich parallel oder im Wesentlichen parallel zum Querträger erstreckenden Quersteg und durch einen längsträgerseitigen, sich parallel oder im Wesentlichen parallel zur längsträgerseitigen Flanschplatte erstreckenden Quersteg verbunden sind;
- das Strangpressprofil des zweiten Deformationselements weist Wandabschnitte mit Krümmungen, Falten, Sicken, Einschnürungen, Wandstärkenschwächungen und/oder Wandstärkenverstärkungen auf;
- durch die Formgebung von Wänden oder Wandabschnitten des das zweite Deformationselement bildende Strangpressprofil werden Solldeformationselemente und/oder Dehnungsausgleichselemente gebildet;
- das Strangpressprofil des zweiten Deformationselements weist querträgerseitig und/oder längsträgerseitig Montageabschnitte und/oder Montageelement auf, die dafür eingerichtet und bestimmt sind, das Strangpressprofil in der Stoßfängeranordnung zu montieren;
- das erste Deformationselement ist eine Crashbox und durch ein Strangpressprofil gebildet;
- der Querträger ist ein Strangpressprofil;
- der Querträger schließt eine Hohlkammer ein;
- der Querträger schließt zwei Hohlkammern ein;
- der Querträger weist im vertikalen Querschnitt ein U-förmiges oder C-förmiges oder Hut-förmiges Profil auf;
- der Querträger, die ersten Deformationselemente und/oder das zweite Deformationselement bestehen aus Metall, insbesondere aus Leichtmetall, wobei die Bauteile aus dem gleichen Werkstoff oder aus unterschiedlichen Werkstoffen und/oder Werkstoffgüten bestehen können.
- das Strangpressprofil weist zumindest eine Strangpressnaht auf, welche in z-Achse (Fahrzeughochachse) verläuft.
- das Strangpressprofil weist Strangpressnähte auf, welche bezogen auf die Horizontalebene (= Fahrzeugebene) in den Ecken bzw. Eckbereichen des Strangpressprofils liegen.

Die Erfindung ist nachfolgend anhand von in den Zeichnungen dargestellten Ausführungsbeispielen näher beschrieben. Es zeigen:
- Figur 1: technisch schematisiert eine Stoßfängeranordnung in einer Draufsicht;
- Figur 2: einen Ausschnitt aus einer Stoßfängeranordnung mit der Darstellung eines Endabschnitts der Stoßfängeranordnung in einer Perspektive;
- Figur 3: eine perspektivische Darstellung des zweiten Deformationselements aus der Figur 2;
- Figur 4: einen Ausschnitt aus einer weiteren Ausführungsform einer Stoßfängeranordnung in perspektivischer Darstellungsweise;
- Figur 5: das zweite Deformationselement entsprechend der Darstellung von Figur 4;
- Figuren 6 bis 9: Ausführungsformen von zweiten Deformationselementen jeweils in einer perspektivischen Darstellung und teilweise technisch schematisiert;
- Figur 10a: einen Ausschnitt aus einer Stoßfängeranordnung vor einem Pfahltest (Center Pole Test);
- Figur 10b: die Darstellung der Stoßfängeranordnung nach dem Aufprall beim Pfahltest;
- Figur 11a: einen Ausschnitt aus einer Stoßfängeranordnung vor einem RCAR-Test (Research Council for Automobile Repairs) und
- Figur 11b: die Stoßfängeranordnung entsprechend der Darstellung von Figur 10 nach dem Aufprall beim RCAR-Test.

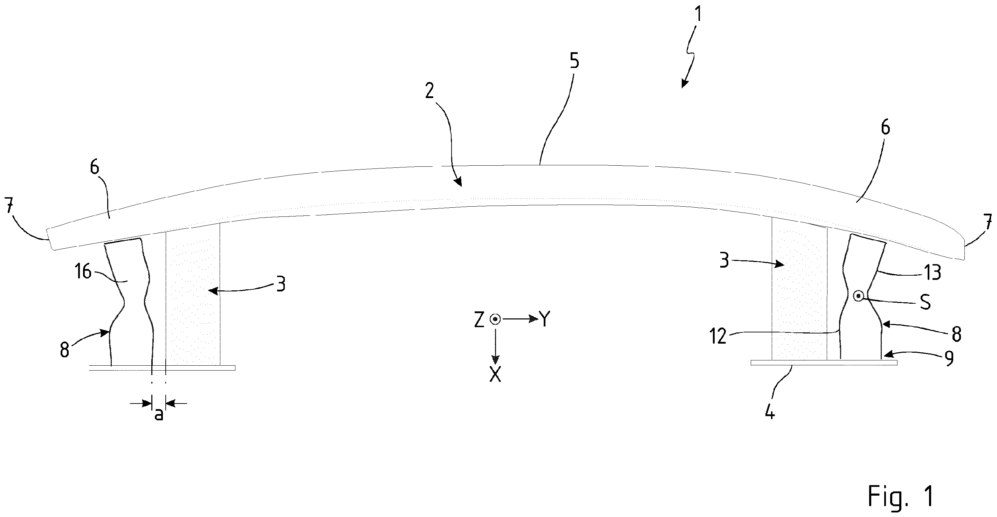

In den Figuren 1 bis 11 werden für gleiche oder ähnliche Bauteile die gleichen Bezugszeichen verwendet, auch wenn aus Gründen der Vereinfachung auf eine wiederholte Beschreibung verzichtet wird.

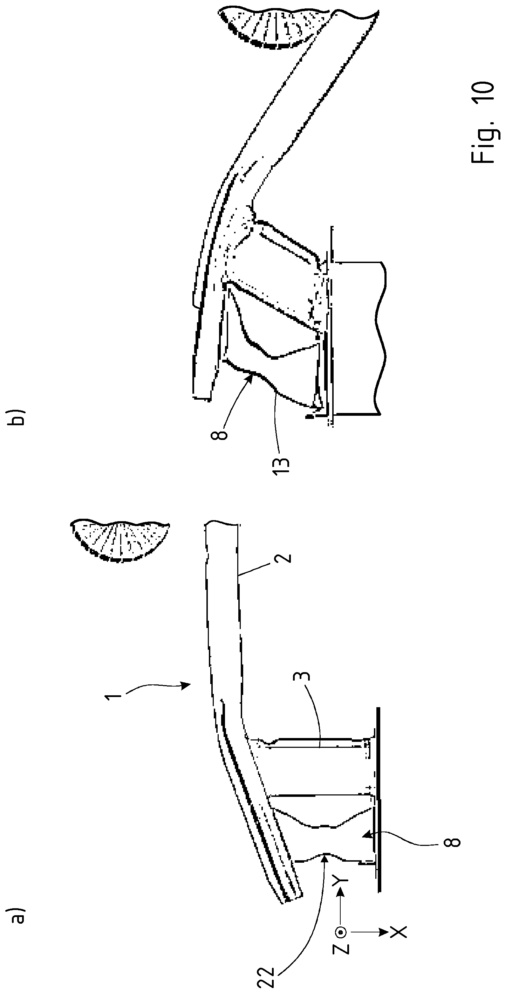

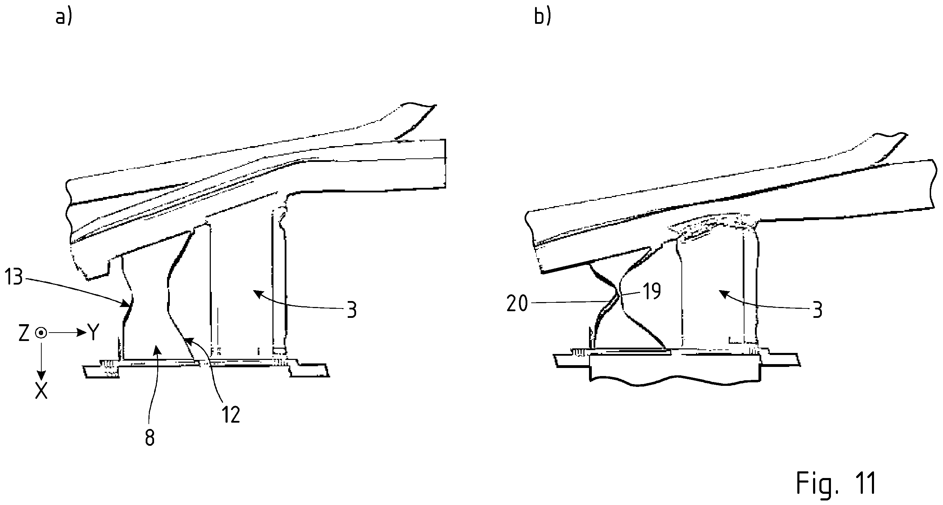

In den Figuren 1 ebenso wie in den Figuren 10a und 11a ist jeweils ein Fahrzeugkoordinatensystem dargestellt. Das Fahrzeugkoordinatensystem kennzeichnet die Achsen innerhalb eines Kraftfahrzeugs und der im Kraftfahrzeug verbauten Stoßfängeranordnung 1. Die x-Achse entspricht der Fahrzeuglängsachse, die y-Achse entspricht der Fahrzeugquerachse und die z-Achse entspricht der Fahrzeughochachse.

Anhand der Figur 1 ist der grundsätzliche Aufbau einer erfindungsgemäßen Kraftfahrzeug-Stoßfängeranordnung 1 erläutert.

Die Stoßfängeranordnung 1 weist eine quer zu hier nicht dargestellten Längsträgern eines Kraftfahrzeugs festlegbaren Querträger 2 auf. Die Stoßfängeranordnung 1 umfasst des Weiteren erste Deformationselemente in Form von Crashboxen 3.

Der Querträger 2 erstreckt sich in Fahrzeugquerachse (y-Achse). Die Stoßfängeranordnung 1 ist über die Crashboxen 3 an den Längsträgern unter Eingliederung einer längsträgerseitigen Flanschplatte 4 abgestützt. Über die Flanschplatten 4 wird die Verbindung der Stoßfängeranordnung 1 zum Kraftfahrzeug hergestellt.

Der Querträger 2 weist einen mittleren Längenabschnitt 5 auf, an den sich beidseitig einteilig und werkstoffeinheitlich Endabschnitte 6 anschließen. Die Endabschnitte 6 verlaufen jeweils von einer Crashbox 3 auswärts zu dem jeweiligen freien Ende 7 des Querträgers 2.

Seitlich neben den Crashboxen 3 nach außen in Richtung zum freien Ende 7 versetzt mit Abstand a neben einer Crashbox 3 ist jeweils ein zweites Deformationselement angeordnet. Bei den zweiten Deformationselementen handelt es sich um Strangpressprofile 8. Die zweiten Deformationselemente sind zwischen einem Endabschnitt 6 des Querträgers 2 und einer längsträgerseitigen Abstützung 9 angeordnet. Die längsträgerseitige Abstützung 9 ist an der Flanschplatte 4 ausgebildet.

Die die zweiten Deformationselemente bildenden Strangpressprofile 8 sind aus einem stranggepressten Profilstrang abgeteilt. Die Strangpressrichtung S, in welcher der Profilstrang bei dessen Herstellung stranggepresst worden ist, ist bei dem in der Stoßfängeranordnung 1 montierten Strangpressprofilen 8 in z-Achse (Fahrzeughochachse) des Kraftfahrzeugs orientiert. Die Strangpressprofile 8 sind von dem Profilstrang auf Länge abgeteilt, wobei die Länge der Höhe des zweiten Deformationselements in Fahrzeughochachse entspricht.

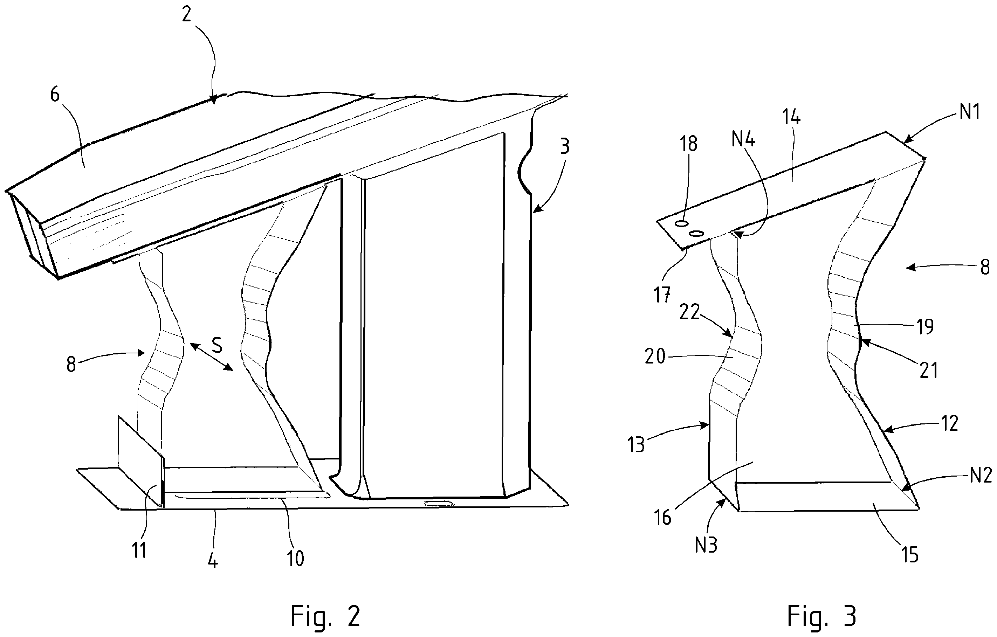

Einen Ausschnitt aus einer Stoßfängeranordnung 1 zeigt die Figur 2. Das in der Stoßfängeranordnung 1 gemäß der Darstellung der Figur 2 angeordnete und durch ein Strangpressprofil 8 gebildete zweite Deformationselement ist in der Figur 3 einzeln dargestellt.

Längsträgerseitig stützt sich das zweite Deformationselement bzw. das Strangpressprofil 8 an der Flanschplatte 4 ab. An der Flanschplatte 4 ist ein Positionierelement 10 und ein Montageelement 11 für das Strangpressprofil 8 ausgebildet. Das Montageelement 11 ist durch einen Steg bzw. Schenkel gebildet und dient insbesondere auch der form- und kraftschlüssigen Kopplung, beispielsweise zur Verschraubung des Strangpressprofils 8 mit der Flanschplatte 4. In der Figur 2 nicht dargestellt sind optionale Montageöffnungen in dem Montageelement 11.

Die Crashbox 3 und das Strangpressprofil 8 stützen sich an der gemeinsamen Flanschplatte 4 ab.

Das Strangpressprofil 8 besteht vorzugsweise aus Leichtmetall bzw. einer Leichtmetalllegierung. Das Strangpressprofil 8 weist eine innere Seitenwand 12 und eine äußere Seitenwand 13 auf. Die innere Seitenwand 12 verläuft an der zur Crashbox 3 weisenden Seite des Strangpressprofils 8. Die äußere Seitenwand 13 verläuft an der zum freien Ende 7 weisenden Seite des Strangpressprofils 8. Die innere Seitenwand 12 und die äußere Seitenwand 13 sind durch einen querträgerseitigen vorderen Quersteg 14 und einen längsträgerseitigen hinteren Quersteg 15 verbunden. Die Seitenwände 12, 13 und die Querstege 14, 15 des Strangpressprofils 8 schließen eine Hohlkammer 16 ein.

Das Strangpressprofil 8 ist in Längsrichtung des Querträgers 2 mit Abstand a angeordnet. Der Abstand a ist gemessen zwischen der zum Strangpressprofil weisenden Seitenwand der Crashbox und der inneren Seitenwand 12 des Strangpressprofils 8.

Das Strangpressprofil 8 weist einen Montageabschnitt 17 auf. Der Montageabschnitt 17 ist durch eine Verlängerung des querträgerseitigen Querstegs 14 gebildet. Der Montageabschnitt 17 steht in Verlängerung des querträgerseitigen Querstegs 14 über die äußere Seitenwand 13 in Richtung zum freien Ende 7 des Querträgers 2 vor. Der Montageabschnitt 17 weist Montageöffnungen 18 zur Durchführung von Verbindungsmitteln auf, über welche das Strangpressprofil 8 am Querträger 2 befestigt werden kann.

Die innere Seitenwand 12 des Strangpressprofils 8 weist einen zweifach gekrümmten bzw. gewellten Wandabschnitt 19 auf. Die äußere Seitenwand 13 weist ebenfalls einen wellenförmig gestalteten bzw. in einem Bogen verlaufenden Wandabschnitt 20 auf. Die Wandabschnitte 19 und 20 sind so konzipiert, dass sich bei einem Anprall ein Wellenberg in der äußeren Seitenwand 13 innerhalb der beiden Wellen bzw. eines Wellentals der inneren Seitenwand 12 abstützen kann und gegen Verrutschen gesichert ist. Der gekrümmt verlaufende Wandabschnitt 19 in der inneren Seitenwand 12 bildet ein Solldeformationselement 21, um eine gezielte Deformation bei einem Anprall zu initiieren. Der gekrümmt verlaufende Wandabschnitt 20 in der äußeren Seitenwand 13 bildet ein Dehnungsausgleichselement 22, welches bei einem zentralen Anprall und der dabei auftretenden Zugbelastungen gestreckt wird, wobei das Dehnungsausgleichselement 22 begradigt wird.

Erkennbar in der Figur 3 sind vier Strangpressnähte N1, N2, N3, N4. Die Strangpressnähte N1 bis N4 sind aufgrund der relativ geringen Verformungsgefahr bzw. Beanspruchung in den vier Eckbereichen des Strangpressprofils 8 positioniert am Übergang jeweils zwischen dem querträgerseitigen Quersteg 14, dem längsträgerseitigen Quersteg 15 und der inneren Seitenwand 12 sowie der äußeren Seitenwand 13.

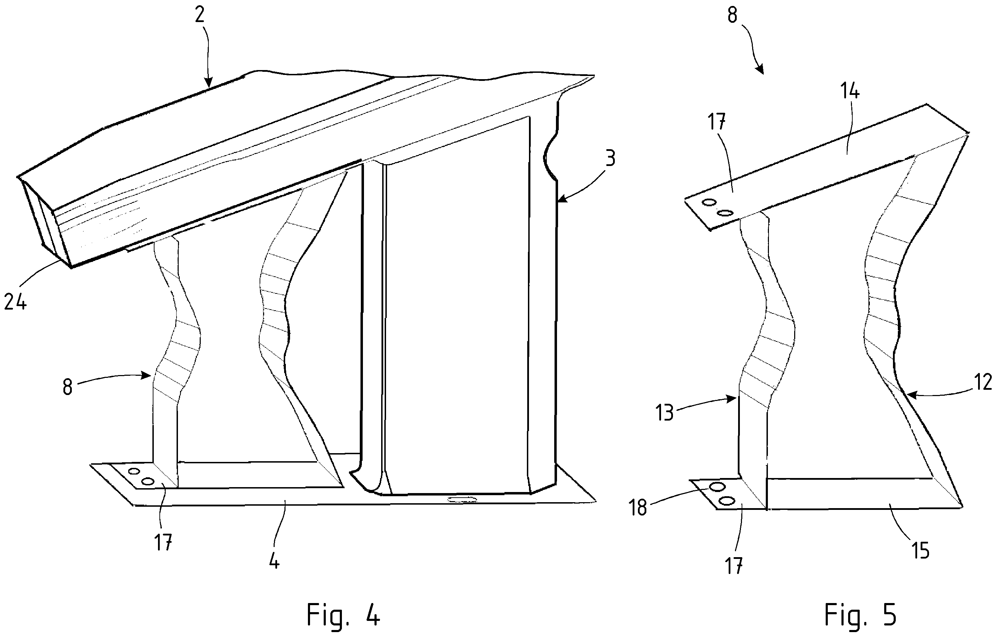

Bei der Stoßfängeranordnung 1 gemäß der Darstellung der Figur 4 ist ein durch ein Strangpressprofil 8 gebildetes zweites Deformationselement vorgesehen, wie es in der Figur 5 näher zu erkennen ist. Die Stoßfängeranordnung 1 und das Strangpressprofil 8 entsprechen vom grundsätzlichen Aufbau her der zuvor beschriebenen Ausführungsform. Bei dem in der Figur 5 dargestellten Strangpressprofil 8 weisen sowohl der querträgerseitige Quersteg 14 als auch der längsträgerseitige Quersteg 15 einen Montageabschnitt 17 auf. Die Montageabschnitte 17 sind jeweils durch eine nach außen vorstehende Verlängerung des Querstegs 14 bzw. des Querstegs 15 gebildet. Jeder Montageabschnitt 17 weist Montageöffnungen 18 zur Durchführung von Verbindungsmitteln auf.

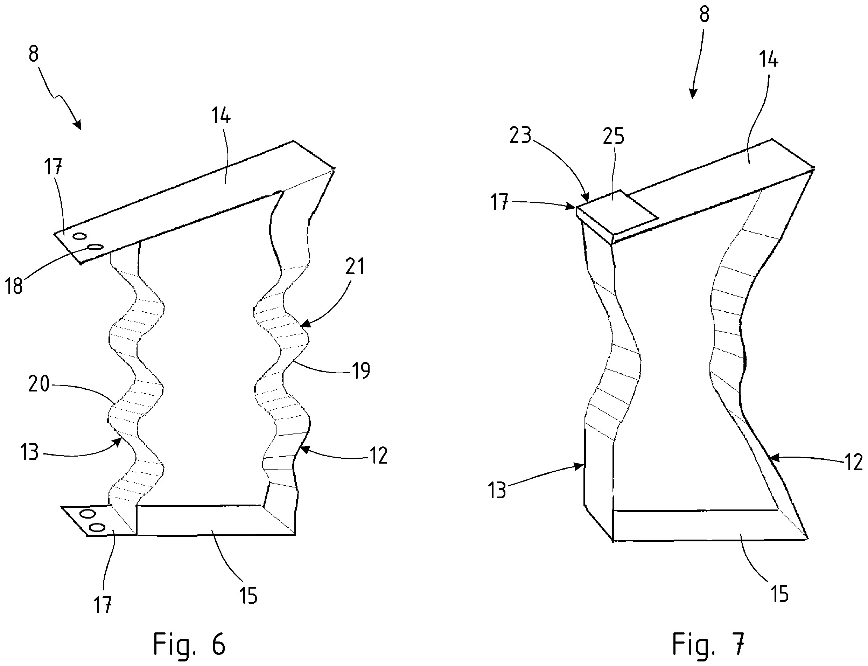

Die Figuren 6 bis 8 zeigen verschiedene Ausführungsformen von Strangpressprofilen 8, die jeweils ein zweites Deformationselement innerhalb einer Stoßfängeranordnung 1 bilden können. Die Strangpressprofile 8 weisen eine aus dem Strangpressvorgang resultierende Strangpressrichtung S auf. Die Strangpressprofile 8 sind in einer Stoßfängeranordnung 1 so angeordnet, dass die Strangpressrichtung in z-Achse (Fahrzeughochachse) gerichtet ist.

Die innere Seitenwand 12 und die äußere Seitenwand 13 des Strangpressprofils 8, wie in Figur 6 dargestellt, ist mehrfach wellenförmig gekrümmt wobei die Amplitude und Wellenlänge aufeinander abgestimmt sind, derart, dass insbesondere während eines Small Overlap-Anpralls zueinander weisende Wellenberge einander verformungsbedingt in Kontakt treten und sich gegenseitig abstützen.

Bei dem Strangpressprofil 8 gemäß der Darstellung von Figur 7 ist am querträgerseitigen vorderen Quersteg 14 ein Montageabschnitt 17 zur kraft- und formschlüssigen Verbindung mit dem Querträger 2 vorgesehen. Der Montageabschnitt 17 ist durch ein Hakenelement 23 am querträgerseitigen Quersteg 14 gebildet. Mit dem Hakenelement 23 kann das Strangpressprofil 8 auf eine Querträgerrückwand 24 aufgeschoben werden. Dies ist insbesondere möglich, wenn es sich bei dem Querträger 2 um ein Einkammerprofil handelt. Am Querträger 2 kann auch eine Freimachung vorgesehen sein zur Aufnahme der oberen Zunge 25 des Hakenelements 23.

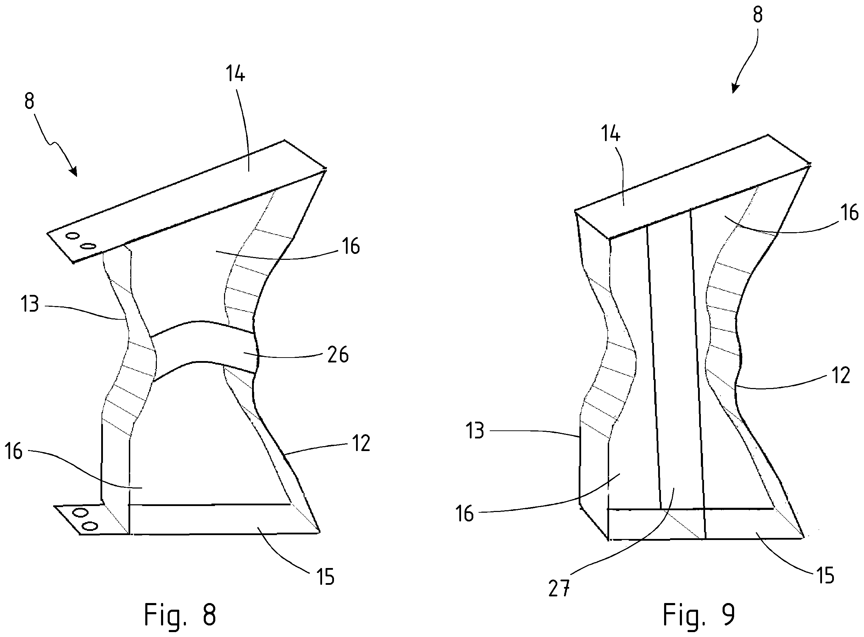

Bei dem Strangpressprofil 8 wie in der Figur 8 dargestellt, ist ein sich zwischen der inneren Seitenwand 12 und der äußeren Seitenwand 13 erstreckender Mittelsteg 26 vorgesehen. Die Darstellung ist technisch schematisiert. Der Mittelsteg 26 ist werkstoffeinheitlich einstückiger Bestandteil des Strangpressprofils 8 und erstreckt sich in mittlerem Bereich jeweils zwischen den gekrümmt verlaufenden Wandabschnitten 19 bzw. 20 der inneren Seitenwand 12 und der äußeren Seitenwand 13.

In dieser Ausgestaltung weist das Strangpressprofil 8 zwei Hohlkammern 16 auf.

Bei dem Strangpressprofil 8, wie in der Figur 8 dargestellt, erstreckt sich eine Mittelwand 27 zwischen dem längsträgerseitigen Quersteg 15 und dem querträgerseitigen Quersteg 14. Auch durch diese Ausgestaltung weist das Strangpressprofil 8 zwei Hohlkammern 16 auf.

Anhand der Figuren 10a und 10b ist das Verformungsverhalten der Stoßfängeranordnung 1 bei einem Pfahltest (Center Pole Test) erläutert. Bei einem Pfahltest trifft die Stoßfängeranordnung in Fahrzeuglängsrichtung mittig auf ein durch einen Pfahl gebildetes Hindernis (Figur 10a).

Beim Aufprall verformt die Stoßfängeranordnung 1 wie in der Figur 10b dargestellt. Über dem Querträger 2 wird die aus dem Anprall resultierenden Energie in die Crashbox 3 und das durch das Strangpressprofil 8 gebildete äußere zweite Deformationselement eingeleitet. Crashbox 3 und Strangpressprofil 8 werden in Richtung Fahrzeugquerachse verformt. Bei der Verformung des Strangpressprofils 8 wird die äußere Seitenwand 13 auf Zug belastet. Hierbei streckt sich das Dehnungsausgleichselement 22 in der Seitenwand 13, wobei Stoßenergie abgebaut bzw. umgewandelt wird und einem Versagen der äußeren Seitenwand 13 entgegengewirkt wird.

Anhand der Figuren 11a und 11b ist ein Anprallvorgang bei einem RCAR-Struktur-Test erläutert. Bei einem RCAR-Test kollidiert die Stoßfängeranordnung 1 mit einem Überdeckungsgrad von 40% axial auf eine feststehende Barriere. Die Figur 11a zeigt die Situation unmittelbar vor dem Aufprall. Die Figur 11b zeigt die Situation nach dem Aufprall.

Die Stoßfängeranordnung 1 und das darin integrierte erste Deformationselement in Form der Crashbox 3 und das durch das Strangpressprofil 8 gebildete zweite Deformationselement werden deformiert. Hierbei wird die Stoßenergie in Verformungsarbeit umgewandelt. Die im Strangpressprofil 8 in y-Achse mit Abstand zueinander verlaufenden Wandabschnitte 19, 20 der Seitenwände 12, 13 sind dafür eingerichtet und bestimmt, sich in einem Crashfall gegeneinander abzustützen. Beim Deformationsvorgang werden die innere Seitenwand 12 und die äußere Seitenwand 13 des Strangpressprofils 8 aufeinander zu bewegt und stützen sich gegeneinander ab. Hierfür sind der Wandabschnitt 19 in der inneren Seitenwand 12 und der Wandabschnitt 20 in der äußeren Seitenwand 13 in ihrer Kontur aufeinander abgestimmt, beispielsweise komplementär zueinander gestaltet, so dass die Krümmungen der Wandabschnitte 19, 20 abstützend ineinander greifen.

Möglich ist, dass das Strangpressprofil 8 und die Flanschplatte 4 einstückig bzw. einteilig und werkstoffeinheitlich gemeinsam durch Strangpressen hergestellt, d. h. extrudiert sind.

### Bezugszeichen:

- 1 -: Stoßfängeranordnung
- 2 -: Querträger
- 3 -: Crashbox
- 4 -: Flanschplatte
- 5 -: Längenabschnitt
- 6 -: Endabschnitt
- 7 -: freies Ende von 2
- 8 -: Strangpressprofil
- 9 -: Abstützung
- 10 -: Positionierelement
- 11 -: Montageelement
- 12 -: innere Seitenwand von 8
- 13 -: äußere Seitenwand von 8
- 14 -: querträgerseitiger Quersteg
- 15 -: längsträgerseitiger Quersteg
- 16 -: Hohlkammer
- 17 -: Montageabschnitt
- 18 -: Montageöffnung
- 19 -: Wandabschnitt
- 20 -: Wandabschnitt
- 21 -: Solldeformationselement
- 22 -: Dehnungsausgleichselement
- 23 -: Hakenelement
- 24 -: Querträgerrückwand
- 25 -: Zunge von 23
- 26 -: Mittelsteg
- 27 -: Mittelwand

- a -: Abstand
- S -: Strangpressrichtung

## Patentansprüche

1. Kraftfahrzeug-Stoßfängeranordnung mit einem Querträger (2) und ersten Deformationselementen in Form von Crashboxen (3), wobei seitlich neben zumindest einem ersten Deformationselement ein zweites Deformationselement vorgesehen ist, wobei das zweite Deformationselement ein Strangpressprofil (8) ist und eine innere Seitenwand (12) und eine äußere Seitenwand (13) aufweist, welche über zumindest einen Quersteg (14, 15) miteinander verbunden sind, wobei das zweite Deformationselement relativ zum ersten Deformationselement nach außen in Richtung zum Ende (7) des Querträgers (2) versetzt angeordnet ist und jeweils eine der Crashboxen (3) zwischen einem Längsträger des Kraftfahrzeugs und dem Querträger (2) eingliederbar ist, wobei der Querträger (2) einen mittleren Längenabschnitt (5) aufweist, an den sich beidseitig Endabschnitte (6) anschließen, welche jeweils von einer Crashbox (3) auswärts zu einem äußeren Ende (7) des Querträgers (2) verlaufen, wobei seitlich neben zumindest einer Crashbox (3) zwischen dem Endabschnitt (6) und einer längsträgerseitigen Abstützung (9) das Strangpressprofil (8) angeordnet ist, **dadurch gekennzeichnet, dass** zumindest ein Wandabschnitt (19, 20) des Strangpressprofils (8) ein Solldeformationselement (21) und/oder ein Dehnungsausgleichselement (22) aufweist.

2. Stoßfängeranordnung nach Anspruch 1, **dadurch gekennzeichnet, dass** das Strangpressprofil (8) zumindest eine Hohlkammer (16) aufweist, welche an der Unterseite und an der Oberseite des Strangpressprofils (8) offen ist.

3. Stoßfängeranordnung nach einem der Ansprüche 1 bis 2, **dadurch gekennzeichnet, dass** mit Abstand zueinander verlaufende Wandabschnitte (19, 20) des Strangpressprofils (8) dazu ausgebildet und bestimmt sind, sich in einem Crashfall gegeneinander abzustützen.

4. Stoßfängeranordnung nach einem der Ansprüche 1 bis 3, **dadurch gekennzeichnet, dass** das Strangpressprofil (8) Montageabschnitte (17) aufweist zur stoffschlüssigen oder zur kraft- und/oder formschlüssigen Verbindung mit dem Querträger (2) und/oder mit einer längsträgerseitigen Flanschplatte (4).

5. Stoßfängeranordnung nach einem der Ansprüche 1 bis 4, **dadurch gekennzeichnet, dass** mindestens eine Flanschplatte (4) vorgesehen ist, an welcher sich ein längsträgerseitiges Ende einer Crashbox (3) und das Strangpressprofil (8) abstützen.

6. Stoßfängeranordnung nach Anspruch 5, **dadurch gekennzeichnet, dass** die Flanschplatte (4) ein Positionierelement (10) und/oder ein Montageelement (11) aufweist, an welchem das Strangpressprofil (8) zur Anlage gelangt.

7. Stoßfängeranordnung nach einem der Ansprüche 4 bis 6, **dadurch gekennzeichnet, dass** das Strangpressprofil (8) und eine Flanschplatte (4) einteilig und werkstoffeinheitlich extrudiert sind.

8. Stoßfängeranordnung nach einem der Ansprüche 1 bis 7, **dadurch gekennzeichnet, dass** eine Crashbox (3) und ein benachbartes Strangpressprofil (8) in Längsrichtung des Querträgers (2) mit Abstand (a) angeordnet sind.

9. Stoßfängeranordnung nach einem der Ansprüche 1 bis 8, **dadurch gekennzeichnet, dass** das Strangpressprofil (8) wenigstens eine Strangpressnaht (N1 - N4) aufweist, wobei die Strangpressnaht (N1 - N4) in einem Eckbereich am Übergang zwischen einem Quersteg (14, 15) und einer Seitenwand (12, 13) angeordnet ist.

## Claims

1. Motor vehicle bumper arrangement with a cross member (2) and first deformation elements in the form of crash boxes (3), wherein a second deformation element is provided laterally next to at least one first deformation element,
wherein the second deformation element is an extruded profile (8) and has an inner side wall (12) and an outer side wall (13), which are connected to one another via at least one transverse web (14, 15),
wherein the second deformation element is disposed offset outwardly relative to the first deformation element in the direction of the end (7) of the cross member (2) and one of the crash boxes (3) can be integrated between a longitudinal member of the motor vehicle and the cross member (2),
wherein the cross member (2) has a central longitudinal section (5) to which end sections (6) are connected on both sides, each of which extends from a crash box (3) outwardly to an outer end (7) of the cross member (2), wherein the extruded profile (8) is disposed laterally next to at least one crash box (3) between the end section (6) and a longitudinal member-side support (9),
**characterised in that** at least one wall section (19, 20) of the extruded profile (8) has a target deformation element (21) and/or an expansion compensation element (22).

2. Bumper arrangement according to claim 1, **characterised in that** the extruded profile (8) has at least one hollow chamber (16), which is open at the bottom and at the top of the extruded profile (8).

3. Bumper arrangement according to any one of claims 1 to 2, **characterised in that** wall sections (19, 20) of the extruded profile (8), which run at a distance from one another, are configured and intended to support one another in the event of a crash.

4. Bumper arrangement according to any one of claims 1 to 3, **characterised in that** the extruded profile (8) has mounting sections (17) for the material-bonding or for the force-fitting and/or form-fitting connection with the cross member (2) and/or with a flange plate (4) on the longitudinal member side.

5. Bumper arrangement according to any one of claims 1 to 4, **characterised in that** at least one flange plate (4) is provided, on which a longitudinal member-side end of a crash box (3) and the extruded profile (8) are supported.

6. Bumper arrangement according to claim 5, **characterised in that** the flange plate (4) has a positioning element (10) and/or a mounting element (11) against which the extruded profile (8) abuts.

7. Bumper arrangement according to any one of claims 4 to 6, **characterised in that** the extruded profile (8) and a flange plate (4) are extruded in one piece and from the same material.

8. Bumper arrangement according to any one of claims 1 to 7, **characterised in that** a crash box (3) and an adjacent extruded profile (8) are disposed at a distance (a) in the longitudinal direction of the cross member (2).

9. Bumper arrangement according to any one of claims 1 to 8, **characterised in that** the extruded profile (8) has at least one extrusion seam (N1 - N4), wherein the extrusion seam (N1 - N4) is disposed in a corner region at the transition between a transverse web (14, 15) and a side wall (12, 13).

## Revendications

1. Ensemble formant pare-chocs de véhicule à moteur, comprenant une traverse (2) et des premiers éléments de déformation sous forme de crash-boxes (3), dans lequel un deuxième élément de déformation est prévu latéralement à côté d'au moins un premier élément de déformation, le deuxième élément de déformation étant un profilé extrudé (8) et présente une paroi latérale intérieure (12) et une paroi latérale extérieure (13), lesquelles sont reliées entre elles par au moins une traverse (14, 15), le deuxième élément de déformation étant disposé de manière décalée vers l'extérieur par rapport au premier élément de déformation en direction de l'extrémité (7) de la traverse (2) et l'une des crash-boxes (3) peut respectivement être intégrée entre un longeron du véhicule à moteur et la traverse (2), la traverse (2) présentant une section longitudinale centrale (5) à laquelle se raccordent des deux côtés des sections d'extrémité (6), lesquelles s'étendent respectivement à partir d'une crash-box (3) vers l'extérieur vers une extrémité extérieure (7) de la traverse (2), le profilé extrudé (8) étant disposé latéralement à côté d'au moins une crash-box (3) entre la section d'extrémité (6) et un appui côté longeron (9), **caractérisé en ce qu'**au moins une section (19, 20) de paroi du profilé extrudé (8) présente un élément (21) de déformation contrôlée et/ou un élément (22) de compensation de dilatation.

2. Ensemble formant pare-chocs selon la revendication 1, **caractérisé en ce que** le profilé extrudé (8) présente au moins une chambre creuse (16), laquelle est ouverte sur la face inférieure et sur la face supérieure du profilé extrudé (8).

3. Ensemble formant pare-chocs selon l'une quelconque des revendications 1 à 2, **caractérisé en ce que** des sections (19, 20) de paroi du profilé extrudé (8) s'étendant à distance les unes des autres sont réalisées pour et destinées à s'appuyer les unes contre les autres en cas de collision.

4. Ensemble formant pare-chocs selon l'une quelconque des revendications 1 à 3, **caractérisé en ce que** le profilé extrudé (8) présente des sections de montage (17) pour la liaison de matière ou à force et/ou par complémentarité de formes avec la traverse (2) et/ou avec une plaque (4) à bride côté longeron.

5. Ensemble formant pare-chocs selon l'une quelconque des revendications 1 à 4, **caractérisé en ce qu'**au moins une plaque (4) à bride est prévue, sur laquelle s'appuient une extrémité côté longeron d'une crash-box (3) et le profilé extrudé (8).

6. Ensemble formant pare-chocs selon la revendication 5, **caractérisé en ce que** la plaque (4) à bride présente un élément (10) de positionnement et/ou un élément (11) de montage, sur lequel le profilé extrudé (8) arrive en appui.

7. Ensemble formant pare-chocs selon l'une quelconque des revendications 4 à 6, **caractérisé en ce que** le profilé extrudé (8) et une plaque (4) à bride sont extrudés d'une seule pièce et avec homogénéité de matériau.

8. Ensemble formant pare-chocs selon l'une quelconque des revendications 1 à 7, **caractérisé en ce qu'**une crash-box (3) et un profilé extrudé (8) adjacent sont disposés dans la direction longitudinale de la traverse (2) avec une distance (a).

9. Ensemble formant pare-chocs selon l'une quelconque des revendications 1 à 8, **caractérisé en ce que** le profilé extrudé (8) présente au moins une soudure extrudée (N1 - N4), dans lequel la soudure extrudée (N1 - N4) est disposée dans une zone d'angle au niveau de la transition entre une traverse (14, 15) et une paroi latérale (12, 13).
